# EUROPEAN PATENT SPECIFICATION

(11) **EP 4 561 022 B1**
(45) Date of publication and mention of the grant of the patent: **10.06.2026**
(21) Application number: 24213871.7
(22) Date of filing: 19.11.2024
(51) Int. Cl.: H04L 67/12, G06F 21/55, G06F 21/57, H04L 9/40, H04L 12/40, H04L 12/12

(54) **VEHICULAR CONTROL UNIT COMPRISING A PARTITIONING SYSTEM FOR AT LEAST ONE SECURITY-RELEVANT NETWORK LINE DUE TO A CYBER-ATTACK AND RELATED ROAD VEHICLE**
FAHRZEUGSTEUEREINHEIT MIT EINEM PARTITIONIERUNGSSYSTEM FÜR MINDESTENS EINE SICHERHEITSRELEVANTE NETZWERKLEITUNG DURCH EINEN CYBERANGRIFF UND ZUGEHÖRIGES STRASSENFAHRZEUG
UNITÉ DE COMMANDE DE VÉHICULE COMPRENANT UN SYSTÈME DE PARTITIONNEMENT POUR AU MOINS UNE LIGNE DE RÉSEAU PERTINENTE POUR LA SÉCURITÉ DUE À UNE CYBERATTAQUE ET VÉHICULE ROUTIER ASSOCIÉ

(30) Priority: 21.11.2023 IT 202300024639
(43) Date of publication of application: 28.05.2025
(73) Proprietor: FERRARI S.p.A., 41100 Modena (IT)
(72) Inventor: ROMAGNOLI, Riccardo, 41100 MODENA (IT); LANZILLOTTA, Edmondo, 41100 MODENA (IT); SUAIDEN, Eduardo, 41100 MODENA (IT); DI NARDO, Lorenzo, 41100 MODENA (IT)
(74) Representative: Studio Torta S.p.A.

(56) References cited:
- CN-A- 115 315 700
- CN-A- 115 603 929
- US-A1- 2022 294 812

## Description

### CROSS-REFERENCE TO RELATED APPLICATIONS

This patent application claims priority from Italian patent application no. 102023000024639 filed on November 21, 2023.

### STATE OF THE ART

The invention relates to a vehicular control unit comprising a partitioning system for at least one security-relevant network line, due to a cyber-attack, and to a related road vehicle.

More in detail, the invention can advantageously, though not exclusively be applied to a high-performance road vehicle (for example, a completely electric or hybrid road vehicle), to which explicit reference will be made in the description below without because of this losing in generality.

### BACKGROUND OF THE INVENTION

The patent document US2022294812 discloses an active attack detection in autonomous vehicle networks, wherein messages transmitted by a compromised system component may be neutralized to prevent other system components from implementing the commands specified by the messages.

Heat-powered vehicles as well as hybrid or electric vehicles (EV/PHEV/BEV) are known, which are provided with at least one electric machine, which is electrically connected to a power storage system, namely a battery pack, and is mechanically connected to the drive wheels in order to transmit a torque to them.

The electrical system of a hybrid or electric vehicle usually comprises an electrical circuit with a high voltage (in relative terms, it could also have a nominal voltage of mere 48 Volts) and a high power, to which the electric machine is connected; the high-voltage electrical circuit comprises a storage device (provided with at least one pack of electrochemical batteries, for instance lithium ion or polymer batteries) and a bidirectional DC-AC electronic power converter, which, on the direct current side, is connected to the storage device and, on the alternating current side, is connected to the electric machine and fulfils the function of controlling the electric machine.

The electrical system of these vehicles further comprises an electrical circuit with a low voltage (generally having a nominal voltage of 12 Volts), to which all auxiliary electric services - for instance, the control units of all vehicular sub-systems, the infotainment system, the anti-theft system, the passenger compartment lighting system, the outer lights, the electric starter motor of the heat engine in case of hybrid vehicles, etcetera - are connected.

Among other things, the low-voltage electrical circuit normally also comprises the so-called BMS (Battery Management System) of the high-voltage storage device.

The low-voltage electrical circuit also supplies one or more vehicular domain control units, also known as VCUs *(vehicle control units),* which act as interfaces between the various control units and their respective systems. These control units are responsible for controlling the communication between the various vehicular systems. These communications take place through one or more known networks, such as for example CAN network (Controller Area Network), LIN network (Local Interconnect Network), Ethernet network or others, which require special lines of communication with the aforementioned control units.

The aforementioned VCUs are subjected to increasingly stringent security requirements, as they govern, for example, the CAN lines that interact with safety-relevant actuators, such as the aforementioned electric machine, the brakes, the steering wheels, the active suspensions, other vehicular electric motors, etcetera.

As it is known, commercial vehicles are increasingly connected to the internet and this increasingly exposes them to malicious cyber-attacks.

In particular, in terms of cyber security, there are some possibilities to generate malicious attack paths by exploiting the so-called "cascading", namely the connection between one control unit and another. In particular, messages are maliciously injected into a downstream control unit different from those actually sent by the upstream control unit, replacing or overwriting certain information communications between the control units. If the informative content of these communications is a command or a trigger that starts a reaction, it is possible to provoke an unwanted behaviour of the product, in this case of the vehicle, thus compromising not only its cyber-security, but - in general - the safety of the users on board the vehicle, which could have unwanted behaviours, even serious ones, in light of all the fundamental safety devices controlled by these control units.

The importance of managing possible cyber-attacks against vehicle control units is evident.

To date, the most important control units each include their own hardware and software security systems that identify possible cyber-attacks and hinder them. Some known examples include the compilation of known monitoring software in specific modules that are particularly shielded in terms of security, known as HSM (Hardware Security Modules) or SHE (Secure Hardware Extensions) or even HTA (Hardware Trust Anchors) and finally TPM (Trusted Platform Module).

However, the decentralisation of these security systems would require a constant updating of all the control units, which must necessarily be re-validated after each update and tested. This leads to significant expenditures in terms of economic and temporal resources.

Generally speaking, therefore, there is a need to improve the safeguarding of security-relevant communication networks, especially in the case of cyber-attacks. At the same time, it is important to avoid overloading the domain control units, which still have a limited number of communication lines. Furthermore, for they are critical components, it is also important not to distort their architecture already previously validated.

### SUMMARY OF THE INVENTION

The object of the invention is to provide a vehicular control unit comprising a partitioning system for at least one security-relevant network line, due to a cyber-attack, and a relative road vehicle, which are at least partially free from the drawbacks described above and, at the same time, are simple and economic to be manufactured and carried out.

According to the invention, there are provided a vehicular control unit comprising a partitioning system of at least one security-relevant network line, due to a cyber-attack, and a relative road vehicle, as claimed in the relative independent claims attached hereto and preferably, but not necessarily, in any one of the dependent claims directly or indirectly depending on the independent claims.

The appended claims describe preferred embodiments of the invention and form an integral part of the description.

### BRIEF DESCRIPTION OF THE DRAWINGS

Hereinafter, some embodiments of the invention will be described, in order to allow the latter to be better understood, by way of non-limiting example and with reference to the accompanying drawings, wherein:
- figure 1 is a schematic perspective view, with details left out for greater clarity, of a road vehicle according to an embodiment of the invention;
- figure 2 is a schematic view of a non-limiting embodiment of the electrical system of the road vehicle of figure 1.

### EMBODIMENTS OF THE INVENTION

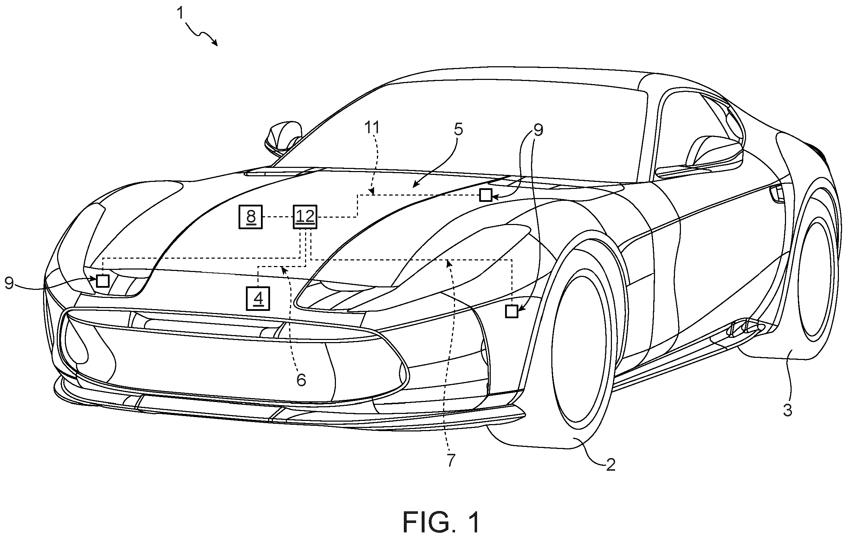

In figure 1, number 1 generically indicates, as a whole, a road vehicle provided with two front wheels 2 and two rear wheels 3, at least a pair (or all) of them receiving the torque from an electric or hybrid powertrain system 4. The powertrain system 4 preferably is, though not in a limiting manner, exclusively electric (namely, only comprising one or more electric motors) or hybrid (namely, comprising an internal combustion heat engine and at least one electric motor).

In the figures, the same numbers and the same reference letters indicate the same elements or components with the same function.

For the purposes of the invention, the term "second" component does not imply the presence of a "first" component. As a matter of fact, these terms are only used as labels to improve clarity and should not be interpreted in a limiting manner.

The elements and features contained in the different preferred embodiments, drawings included, can be combined with one another, without for this reason going beyond the scope of protection of this patent application, as described hereinafter.

In particular, the road vehicle 1 comprises an electrical system 5, which comprises a high-voltage HV electrical circuit 6 (in relative terms), for example, not in a limiting manner, having a nominal voltage of 800 or 400 or 48 Volts, and a low-voltage LV electrical circuit 7, for example having a nominal voltage of 12 Volts.

It should be pointed out that the electrical circuit 6 is defined *"high-voltage"* circuit because it has a nominal voltage (800 V, 400 V, 48 V) that is greater than the nominal voltage (12 V) of the electrical circuit 7, namely the definition *"high voltage"* should be interpreted as concerning the sole electrical system 5 and with reference to the electrical circuit 7 having a nominal voltage of 12 Volts.

According to some preferred non-limiting embodiments, the low-voltage LV electrical circuit 7 comprises an electrical energy storage system 8 (which obviously has the same voltage as the electrical circuit 7), namely a battery, for example lead or lithium-ion battery. Furthermore, the low-voltage LV electrical circuit 7 comprises a plurality of electrical loads 9, each designed to only absorb electrical energy for its own operation (namely, none of these electrical loads 9 are capable of generating electrical energy). In other words, the storage system 8 is configured to supply power to the plurality of electrical loads 9.

Advantageously, though not necessarily, the continuous electrical loads 9 comprise, for example, an alarm system, an infotainment system, inverter and/or BMS and/or steer by wire electronic control units 39, active suspensions, the external lights, an air conditioning system (not shown), the activation of the windows, the radio set, the navigation system, etcetera. As highlighted in the introduction to the description, some electrical loads 9 (for example, through the CAN network described below) are safety-relevant actuators 10, such as an electric machine for moving the vehicle, brakes, steering wheels, active suspensions, etcetera.

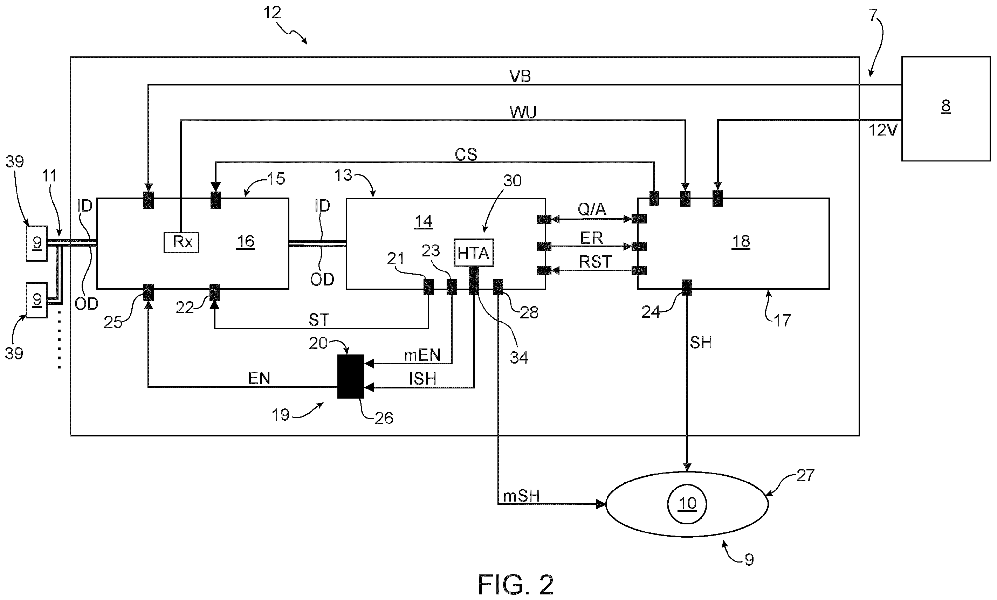

Furthermore, the road vehicle 1 comprises a vehicular network 11, which can be based on one or more known communication protocols, which are not further detailed, such as CAN (shown in the non-limiting embodiment of figure 2), LIN or Ethernet. Obviously, other types of vehicular networks or a combination of those mentioned above can also be used.

The vehicular network 11 is configured to establish a (data) communication between the aforementioned electrical loads 9 and respective control units (which are known and not described in detail below) and between the latter and at least one control unit 12 of the type described below. In particular, in light of the above, it is particularly relevant, also for the safety of the driver and of possible passengers, that the control units 12, 39 and - in general - all the vehicular loads 9 are also protected from the point of view of cyber security, which, if compromised during the operation of the vehicle 1, can also cause malfunctions or blockages of some vehicular systems.

Indeed, the road vehicle 1 comprises a control unit 12, which is powered by the low-voltage electrical circuit 7, in particular by the storage system 8.

The control unit 12 preferably is a domain control unit (also known as a *Vehicle Control Unit* or simply VCU), in particular for connecting the vehicular network 11, more in particular, for example, the CAN network. In detail, the control unit 12 governs the communication, on the vehicular network 11, of other vehicular control units placed at a lower logical level. In other words, the VCU 12 acts as a domain controller for the preferably electric or hybrid road vehicle 1. For example, without limitations, the control unit 12 is configured to read the signals of the sensors installed on the vehicle, for example of the brakes, the HVIL or the connection to the charger, and to act accordingly in order to balance the energy of the system, optimize the torque, control the motor (namely, the electric machine), the high-voltage (HV) battery pack and the on-board charging system until the charger is blocked.

The control unit 12 comprises two macro-elements.

The first macro-element is a processing device 13, in particular a microcontroller 14, which is configured and programmed to process, during normal operation, an output data set OD according to an input data set ID from at least one vehicular network 11.

The second macro-element is a communication device 15, in particular a transceiver 16, which is bidirectionally connected to the processing device 13 and to the vehicular network 11.

The communication device 15 is configured to receive the input data set ID from said at least one vehicular network 11 and to transmit it to the processing device 13 as well as to receive the output data set OD from the processing device and to transmit it to the vehicular network 11. In other words, the communication device 15 represents the circuitry that allows the microcontroller 14 to work and communicate on the vehicular network 11 (for example, on the CAN network) with the rest of the road vehicle 1, hence with the electrical loads 9.

In particular, it is important to avoid that the transmission device 15 may transmit malicious, incorrect messages or may not transmit security-critical messages to one or more secondary control units 39 connected to the domain control unit 12.

The communication device 15 is also configured to selectively operate between a transmission mode ST, in which it is free to communicate bidirectionally with the vehicular network 11 (during normal functional operation) and with the secondary units 39, and a standby mode, in which it can only receive signals from the vehicular network 11 (when the vehicle is turned off, for example following a key cycle, or in the event of problems with the processing device 13, as discussed more in detail below).

Advantageously, the control unit 12, in particular the processing device 13, namely the microcontroller 14, comprises a hardware security module 30 configured to detect cyber security anomalies.

Advantageously, the control unit 12 comprises a partitioning system 19 for at least some lines of the vehicular network 11 (for example of the CAN kind, aimed at secondary control units) that are relevant in terms of security.

In particular, the security module is a Hardware Trust Anchor HTA module (of a known type and not described in detail hereinafter).

For example, within the HTA module, precisely because it is particularly protected and segregated within the microcontroller 14, cyber security software mechanisms are allocated, which intercept the attack by interrupting or sending a signal, as described below, which disables communication with the secondary unit 39 to be protected (or with a plurality of them, if necessary). In this way, an attack aimed at the secondary unit 39 would not be safe not only in terms of cyber security, but also in terms of safety for the driver or passengers of the road vehicle. In other words, the control unit 12 implements a protection mechanism upstream of the control unit to be protected, imposing a barrier that forbids the passage of the attack through the propagation of the malicious message/instruction (cascading).

In particular, the cyber security software mechanisms (of a known type and not further detailed below, also because they are extremely dependent on the vehicular model and on the respective critical aspects) are conceptual mechanisms that are based on the protection of the protocol, namely of the information content that is exchanged between the control unit 12 and the secondary units 39 for the functionality of the road vehicle 1. For example, these mechanisms can comprise: monitoring the timing of the exchange of information between the control unit 12 and the secondary units 39 or the level of clogging of the vehicular network 11 (for example, CAN network), which provides for an exchange of information messages in a substantially predefined time that should not change beyond a certain threshold, except in the presence of cyber-attacks.

The partitioning system 19 is configured so as to limit, in the event of an anomaly of the processing device 13 or a cyber security anomaly detected by the hardware security module 30, the communication device 15 to the (sole) standby mode.

In other words, in case there are malfunctions of the microcontroller 14 or in case the software housed in the HTA detects a threat, the partitioning system 19 blocks the output transmission from the communication device 15. In this way, non-ensured messages that could undermine the safety of the road vehicle 1 are not disseminated to other vehicular control units or to the electrical loads 9.

In particular, therefore, the road vehicle 1 comprises a plurality of secondary control units 39 connected to the control unit 12 and whose safety is entirely entrusted to the partitioning system 19, in particular to the security module.

According to some non-limiting embodiments, which are not shown herein, the partitioning system 19 is configured so as to limit the communication device 15 to the (sole) standby mode even in the event of an anomaly of the auxiliary processing device 17. In other words, in case of malfunctions in at least one of the microcontroller 14 and the companion chip 18 (in addition to the possibility of a cyber-attack detected by the security module 30), the partitioning system 19 blocks the output transmission from the communication device 15.

Preferably, though not in a limiting manner, as described below, the control unit 12 further comprises an auxiliary processing device 17, in particular an auxiliary/companion chip 18, which oversees the operation of the processing device 13 and the supply to power to the communication device 15.

As mentioned above, therefore, the control unit 12 preferably is a VCU that also operates in terms of functional safety. Therefore, the information exchanged on the vehicular network 11 can have a significant value for the safety of the vehicle and of its users. Thanks to the partitioning system 19, the output communication from the unit 12, hence the transmission of the transceiver 16, can selectively be enabled or disabled according to the state of health of the control unit 12, in particular of the microcontroller 14. Therefore, in addition to the block that can be ordered by the HTA, if the microcontroller 14 is not in good health due to a malfunction thereof or to a possible cyber-attack, it is prevented from sending incorrect information or instructions to the rest of the road vehicle 1.

In particular, the partitioning system 19 comprises a first output 21 (physical output, namely a pin) on the processing device 13 and a first input 22, connected to the first output 21, on the communication device 15. The first input 22 is configured to receive from the first output 21 a signal ST for enabling the communication device 15 in receiving from the vehicular network 11, namely for enabling at least the standby mode.

Preferably, though not in a limiting manner, the enabling signal ST is a hardware signal, namely a binary signal transmitted via an electrical cable or a trace.

Advantageously, though not in a limiting manner, the partitioning system 19 comprises a logical operator 20, which comprises at least two inputs connected to the processing device 13 and to the hardware security module 30, respectively, and an output connected to the communication device 15. Preferably, though not in a limiting manner, according to embodiments which are not shown herein, the logical operator 20 comprises a third input connected to the auxiliary processing device 17.

According to the preferred non-limiting embodiment of figure 2, the partitioning system 19 comprises, on the processing device 13, a second output 23 for a transmission-enabling signal mEN and comprises, on the hardware security module, a third output 34 for a signal ISH of good health (in general terms, in particular in relation to the software present within the HTA) of the cyber security of the control unit 12. In detail, the signals emitted by the second output 23 and the third output 34 converge in the logical operator 20, which provides an enabling signal EN as an output.

According to some non-limiting embodiments which are not shown herein, the control unit 12 comprises, on the auxiliary processing device 17, a fourth output 24 for a signal SH of good health (in general terms, in particular of the processing device 13 or of the supply of power to the auxiliary processing device 17). In detail, the signal emitted by the fourth output 24 converges in the logical operator 20 together with the other two signals mEN and ISH.

In particular, wherein the partitioning system 19 comprises, on the communication device (15), a second input 25 connected to the logical operator 20 to receive the enabling signal (EN), which is configured to enable transmission to the vehicular network 11 for the communication device 15, namely to enable the transmission mode, exclusively in co-presence of the transmission-enabling signal mEN from the processing device 13, namely from the microcontroller 14, and of the signal ISH of good heath of the cyber security of the control unit 12 (if necessary, also of the signal SH of good health, namely from the companion chip 18).

Advantageously, though not in a limiting manner, in accordance with the above, the logical operator 20 is an AND port 26. Obviously, it is possible, in case of denied logics for the signals mEN and ISH (and, if necessary, SH), to also use additional or different operators that substantially achieve the same purpose described above, namely to be able to selectively disable the output transmission of the transceiver 16 to the vehicular network 11 in case of malfunctions of the microprocessor 14 or of the hardware security module 30 (or, if necessary, also of the companion chip 18, for example due to an incorrect/insufficient power supply, to faults or external attacks).

Preferably, though not in a limiting manner, therefore, not only the signals emitted by the second output 23 and the third output 34 converge in the logical operator 20, but also the signal emitted by the fourth output 24, so as to affect the enabling signal EN.

Advantageously, though not in a limiting manner, the low-voltage circuit 7 is directly connected to the auxiliary processing device 17 and to the communication device 15. In particular, as mentioned above, the auxiliary processing device 17 supervises the correct supply of power to the control unit 12.

In particular, the vehicle 1 comprises a plurality of safety-relevant actuators 10, whose power supply is subject both to a signal mSH of good health (a voluntary signal, namely used to voluntarily disable the supply of power to the actuators 10) from the processing supply device 13 and to the signal SH of good health coming from the auxiliary processing device 17.

Preferably, though not in a limiting manner, the auxiliary processing device 17 provides a communication power supply signal CS, which allows the communication device 15 to have a stable power supply and to be able, in particular always, to be powered in reception even in the event of lack of operation of the microcontroller 14.

According to the preferred, though non-limiting embodiment of figure 2, the fourth output 24 can be connected (directly, in a hardware manner) to a system 27 for switching off the vehicular safety actuators 10, which is configured to switch off, namely to cut off the supply of power to, at least part of the actuators 10 relevant for vehicular safety in the event of a lack of the signal SH of good health. The lack of such a signal can occur, for example, in the event of problems with the storage system 8 or with a related power supply cable; in these cases, in the doubt that the control unit 12 may not work correctly, the switching-off system 27 is activated by the signals mSH or SH in order to disable the safety-relevant actuators 10 (for example, by limiting them or cutting off their power supply) .

In the non-limiting embodiment of figure 2, the processing device 13 comprises a fifth (dedicated and separate) output 28 for the signal mSH of good health, the fifth output 28 can be/is connected to the system 27 for switching off the vehicular safety actuators 10, which switches off/disables at least part of the vehicular safety actuators 10 in the event of a lack of the signal mSH of good health (or of the signal SH of good health). In this way, in addition to safeguarding cyber security and blocking malicious messages, users' safety is increased even in the event of malfunctions.

According to some preferred non-limiting embodiments which are not shown herein, the control unit 12 comprises a plurality of communication devices 15 (to which the information disclosed above still applies, mutatis mutandis), which are at least partly connected to a same partitioning system 19, which, in the event of an anomaly of the processing device 13 or of a cyber security anomaly detected by the hardware security module 30 (or also, but not limited to, of the auxiliary processing device 17), binds the plurality of communication devices 15 to the standby mode.

In other words, the information disclosed is to be considered capable of being modulated.

By way of example, the control unit 12 can comprise six or seven communication devices 15, some or all of them being disabled in transmissions with the outside when, for example, the microcontroller 14 does not have a guaranteed operation in general terms, but especially with regard to cyber security. Obviously, the communication devices 15 can all belong to a same vehicular network 11, such as a CAN network, or to different networks 11.

Therefore, preferably, though not in a limiting manner, when the microcontroller 14 does not operate correctly, through the signal mEN it is possible to selectively switch off the transceivers 16 that one prefers to disconnect at that time.

On the contrary, in case it were under cyber attack, the module 30, in a way guaranteed by the HTA, would disable, through the signal ISH (namely, by having the logical operator 20 lack said signal), the transceiver 16, simultaneously blocking all the transmissions from the latter to control units 39, thus ensuring that the entire the component goes into a safe state at a vehicular level.

According to further non-limiting embodiments which are not shown herein, for example in order to save resources on the control unit, some or all of the connections of the partitioning system 19 can be actual BUSes internal to the control unit 12. In this way, it is possible to merge the commands to several communication devices 15 in a single line. By so doing, it is possible to selectively protect the secondary control units 39, blocking attacks before they can reach them.

Advantageously, though not in a limiting manner, the signals ISH and mSH are hardware signals controlled by the microcontroller 14; in particular, the signal ISH is controlled by the hardware cyber security module 30, namely by the HTA. On the other hand, the signal SH is a hardware signal controlled by the auxiliary chip 18.

In accordance with the embodiments shown herein, the microcontroller 14, in particular the HTA, allows the level of security to be increased thanks to the fact that the communication port of the control unit, namely the communication device 15, is prevented from transmitting output so as to prevent incorrect and malicious information from being sent to the secondary control units 39, namely to those control units at a hierarchically lower level in the transmission of information.

Advantageously, though not in a limiting manner, the communication device 15 is configured to receive a wake-up signal WU from the vehicular network 11, said signal being transmitted to the auxiliary processing device 17, which, in turn, sends a reset signal RST to the processing device 13, so as to be able to exit the standby mode by entering the transmission mode. In other words, the control unit 12, in the event of problems or cyber attacks, is sure not to transmit wrong messages or instructions to the outside, but remains capable of receiving them from the outside so as to be able to possibly wake up.

In the non-limiting embodiment of figure 2, in order to guarantee the supply of power to the communication device 15 even in the event of a malfunction of the microprocessor 14, the communication device 15 preferably receives a power supply signal VB from the storage system 8 and a communication power supply signal CS from the companion chip 18. In this way, the companion chip 18 closes the supply of power to the communication device 15 and, hence, controls and checks it, preferably cyclically. By so doing, (input) communication by the communication device 15 is made possible independently of the processing device 13.

Preferably, though not in a limiting manner, when the power supplies are stable, the microcontroller 14 can control the operating state of the transceiver 16 through two signals ST and EN, the former putting the transceiver 16 in a condition of only being capable of receiving, while the enabling signal EN enables the operation of the transceiver 16 in full, even in transmission.

In accordance with the above, therefore, the shutdown of the transmission is guaranteed, which, however, is not permanent, but can be resumed due, for example, to a will of the driver, who, through a key cycle or other actions, can trigger the wake-up signal WU and, hence, the reset RST of the microcontroller 14.

According to the preferred, though non-limiting embodiment of figure 2, the companion chip 18 is that device which allows, on the one hand, to guarantee the correct supply of power to the control unit 12 (for example, by means of the signal CS) and, on the other hand, has a monitoring function in relation to the microcontroller 14.

Therefore, in detail, the companion chip 18 continuously checks whether the microcontroller 14 is working correctly. This is done by means of an exchange of known Q\A signals, so-called question/answer, which is schematically shown in the embodiment of figure 2. In other words, the companion chip 18 continuously interrogates the microcontroller 14 and expects certain answers from the latter. When the microcontroller 14 does not answer or does not answer correctly, the companion chip 18 reacts by signalling through the signal SH of good health (namely, by disabling the signal SH of good health, thus indicating that good health is no longer present).

In this way, in use, the companion chip 18 states that whatever the microcontroller 14 is doing is not guaranteed and, therefore, intervenes by switching off the safety-relevant actuators 10 and by disabling the output transmission of the transceiver 16, so that the messages outputted by the microcontroller 16, which is not working correctly, are promptly blocked.

In the non-limiting embodiment of figure 2, the companion chip 18 can also receive an error signal ER from the microcontroller 14, said error signal ER being provided by a sophisticated preserved (security) logic internal to the microcontroller 14. This error signal ER, used for example in case the microcontroller detects a problem or realises to be under external attack, always allows a safe reaction of the type described above to be generated through the companion chip 18.

As mentioned above, in the non-limiting embodiment of figure 2, the companion chip 18 can also send the aforementioned reset signal RST to the microcontroller 14 so as to normally start waking up the microcontroller 14 (upon switching on and following a previous binding to the standby configuration described above). In particular, when the companion chip believes that everything is in order at the control unit system level, it allows the microcontroller 14 to start or resume its normal activity.

Even though the invention described above relates to a specific embodiment, it should not be considered as limited to said embodiment, for its scope of protection also includes all those variants, changes or simplifications covered by the appended claims, such as for example a different type storage systems, of processing or communication devices, of signals exchanged with the same purpose as the ones described above, etcetera.

The embodiments described herein can be combined with one another, without for this reason going beyond the scope of protection of the invention.

The advantages associated with the control unit and the relative road vehicle 1 are remarkable and evident.

First of all, the security of the control unit is improved in absolute terms, avoiding the propagation of incorrect messages, in addition to providing for the switching off/disabling of the safety-relevant actuators.

In addition, a component usually already provided by VCU manufacturers, namely the HTA, is used to monitor cyber security and to block the propagation of malicious messages; therefore, the invention is simple to be implemented even in existing vehicles.

A further advantage of the invention lies in the possibility of protecting control units (locally) connected downstream of the VCU, namely secondary control units, without having to implement security protocols inside them, thus simplifying any operation for updating the methods of detection of malicious attacks.

Furthermore, it is possible to optimise the resources of the microcontroller dedicated to the management of the communication networks. For example, with an X number of vehicular networks connected in Y groups (with Y<X) the pins dedicated to the signals ST and EN are reduced from 2*Y to 2*X. For example, 10 communication networks connected in two groups require an allocation of four pins instead of twenty on the microcontroller 14.

### LIST OF THE REFERENCE NUMBERS OF THE FIGURES

- 1: road vehicle
- 2: front wheels
- 3: rear wheels
- 4: powertrain system
- 5: electrical system
- 6: high-voltage electrical circuit
- 7: low-voltage electrical circuit
- 8: storage system
- 9: electrical loads
- 10: safety-relevant actuators
- 11: vehicular network
- 12: control unit
- 13: processing device
- 14: microcontroller
- 15: communication device
- 16: transceivers
- 17: auxiliary processing device
- 18: companion chip
- 19: partitioning system
- 20: logical operator
- 21: first output
- 22: first input
- 23: second output
- 24: fourth output
- 25: second input
- 26: AND port
- 27: switching-off system
- 28: fifth output
- 30: hardware security module
- 34: third output
- 39: secondary control units
- CS: communication power supply
- EN: enabling signal
- ER: error signal
- HTA: hardware trust anchor
- ID: input data
- ISH: signal of good cyber security health
- mEN: transmission-enabling signal
- mSH: voluntary signal of good health
- OD: output data
- RST: reset signal
- SH: signal of good health
- ST: reception-enabling signal
- VB: power supply signal
- WU: wake-up signal

## Claims

1. A vehicular control unit (12) comprising:
- a processing device (13), in particular a microcontroller (14), which is configured and programmed to process, during normal operation, an output data set (OD) according to an input data set (ID) from at least one vehicular network (11);
- a communication device (15), in particular a transceiver (16), bidirectionally connected to the processing device (13) and the vehicular network (11); wherein the communication device (15) is configured to receive the input data set (ID) from the at least one vehicular network (11) and transmit them to the processing device (13), and to receive the output data set (OD) from the processing device (13) and transmit them to the vehicular network (11);
wherein the communication device (15) is configured to selectively operate between a transmit mode, in which it can communicate bidirectionally with the vehicular network (11), and a standby mode, in which it can only receive from the vehicular network (11);
the control unit (12) comprising a hardware security module (30) configured to detect cyber security anomalies;
the control unit (12) comprising a partitioning system (19), which, selectively in the event of a cyber security anomaly detected by the security hardware module (30), or in particular also in the event of an anomaly of the processing device (13), is configured to constrain the communication device (15) in the standby mode.

2. The control unit (12) according to claim 1, wherein the security module (30) is a Hardware Trust Anchor (HTA) module.

3. The control unit (12) according tc claim 1 or 2, wherein the partitioning system (19) comprises a first output (21) on the processing device (13) and a first input (22), connected to the first output (21), on the communication device (15), the first input (22) being configured to receive from the first output (21) a signal (ST) for enabling the communication device (15) in receiving from the vehicular network (11), i.e., to enable at least the standby mode.

4. The control unit (12) according to any one of the preceding claims, wherein the partitioning system (19) comprises a logical operator (20), which is connected in input to the processing device (13) and the hardware security module (30) and in output to the communication device (15).

5. The control unit (12) according to claim 4, wherein the partitioning system (19) comprises, on the processing device (13), a second output (23) for a transmission-enabling signal (mEN), and comprises, on the hardware safety module, a third output (34) for a cyber security health signal (ISH) of the control unit (12); the second output (23) and the third output (34) converging in the logical operator (20), which provides as an output from itself an enabling signal (EN);
wherein the partitioning system (19) comprises, on the communication device (15), a second input (25) connected to the logical operator (20) to receive the enabling signal (EN), which is configured to enable transmission to the vehicular network (11) for the communication device (15), i.e., to enable the transmit mode, exclusively in co-presence of the transmission enable signal (mEN) and the cyber security health signal (ISH) of the control unit (12).

6. The control unit (12) according to claim 5, wherein the logical operator (20) is an AND port (26).

7. The control unit (12) according to claim 5 or 6 and comprising an auxiliary processing device (17), in particular a companion chip (18), which superintends the operation of the processing device (13) and the power supply of the communication device (15); the auxiliary processing device (17) comprising a fourth output (24) for a signal (SH) of good health of the auxiliary processing device (17), wherein the fourth output (24) is connectable to a system (27) for switching off vehicular safety actuators, which is configured to switch off at least part of the actuators (10) relevant to vehicular safety in the event of a failure of the signal (SH) of good health of the auxiliary processing device (17).

8. The control unit (12) according to claim 7, wherein the second output (23), the third output (34) and the fourth output (24) converge to the logic operator (20), which outputs from itself the enabling signal (EN).

9. The control unit (12) according to claim 7 or 8, wherein the processing device (13) comprises a fifth output (28) for a signal (mSH) of good health of the processing device (13), the fifth output (28) being connectable to the system (27) for switching off the vehicular safety actuators, which switches off at least part of the vehicular safety actuators in the event of a lack of the signal (mSH) of good health of the processing device (13).

10. The control unit (12) according to any one of the preceding claims and comprising a plurality of communication devices, the communication devices being at least partially connected to a same partitioning system (19) which, in the event of a failure of the processing device (13) or a cyber security anomaly detected by the hardware security module, constrains the plurality of communication devices in the standby mode.

11. The control unit (12) according to any one of the preceding claims, wherein the communication device (15) is configured to receive a wake-up signal (WU) from the vehicular network (11), which signal is transmitted to the auxiliary processing device (17) which in turn sends a reset signal (RST) to the processing device (13), so as to be able to exit the wait mode by entering the transmission mode.

12. A road vehicle (1) comprising:
- four wheels (2, 3), of which at least one pair of wheels (2, 3) is driven;
- a powertrain system (4), preferably electric or hybrid;
- a low-voltage electrical circuit (7), in particular comprising a low-voltage storage system (8);
- a control unit (12) according to any one of the preceding claims, which is supplied by the low-voltage electrical circuit (7);
- a vehicular network (11), which connects the control unit (12) with one or more electrical loads (9).

13. The vehicle according to claim 12, wherein the low-voltage circuit is directly connected to the auxiliary processing device (17) and the communication device (15), wherein the auxiliary processing device (17) superintends the correct power supply of the control unit (12).

14. The vehicle according to claim 12 or 13, and comprising a plurality of secondary control units (39) connected to the control unit (12) and whose safety is entirely entrusted to the partitioning system (19), in particular to the safety module (30).

## Patentansprüche

1. Fahrzeugsteuereinheit (12), umfassend:
- eine Verarbeitungsvorrichtung (13), insbesondere einen Mikrocontroller (14), die ausgelegt und programmiert ist, um während des Normalbetriebs einen Ausgangsdatensatz (OD) gemäß einem Eingangsdatensatz (ID) von mindestens einem Fahrzeugnetz (11) zu verarbeiten;
- eine Kommunikationsvorrichtung (15), insbesondere einen Transceiver (16), die bidirektional mit der Verarbeitungsvorrichtung (13) und dem Fahrzeugnetz (11) verbunden ist, wobei die Kommunikationsvorrichtung (15) ausgelegt ist, um den Eingangsdatensatz (ID) von dem mindestens einen Fahrzeugnetz (11) zu empfangen und an die Verarbeitungsvorrichtung (13) zu übertragen und den Ausgangsdatensatz (OD) von der Verarbeitungsvorrichtung (13) zu empfangen und an das Fahrzeugnetz (11) zu übertragen,
wobei die Kommunikationsvorrichtung (15) ausgelegt ist, um wahlweise zwischen einem Übertragungsmodus, in dem sie bidirektional mit dem Fahrzeugnetz (11) kommunizieren kann, und einem Standby-Modus, in dem sie nur von dem Fahrzeugnetz (11) empfangen kann, zu arbeiten,
wobei die Steuereinheit (12) ein Hardware-Sicherheitsmodul (30) umfasst, das ausgelegt ist, um Cybersicherheitsanomalien zu erkennen,
wobei die Steuereinheit (12) ein Partitionierungssystem (19) umfasst, das wahlweise bei einer von dem Hardware-Sicherheitsmodul (30) erkannten Cybersicherheitsanomalie oder insbesondere auch bei einer Störung der Verarbeitungsvorrichtung (13) ausgelegt ist, um die Kommunikationsvorrichtung (15) in den Standby-Modus zu forcieren.

2. Steuereinheit (12) nach Anspruch 1, wobei das Sicherheitsmodul (30) ein Hardware-Trust-Anchor(HTA)-Modul ist.

3. Steuereinheit (12) nach Anspruch 1 oder 2, wobei das Partitionierungssystem (19) einen ersten Ausgang (21) auf der Verarbeitungsvorrichtung (13) und einen mit dem ersten Ausgang (21) verbundenen ersten Eingang (22) auf der Kommunikationsvorrichtung (15) umfasst, wobei der erste Eingang (22) ausgelegt ist, um von dem ersten Ausgang (21) ein Signal (ST) zu empfangen, um die Kommunikationsvorrichtung (15) gegenüber dem Fahrzeugnetz (11) empfangsbereit zu schalten, d. h. zumindest den Standby-Modus zu aktivieren.

4. Steuereinheit (12) nach einem der vorhergehenden Ansprüche, wobei das Partitionierungssystem (19) einen logischen Operator (20) umfasst, der eingangsseitig mit der Verarbeitungseinrichtung (13) und dem Hardware-Sicherheitsmodul (30) und ausgangsseitig mit der Kommunikationsvorrichtung (15) verbunden ist.

5. Steuereinheit (12) nach Anspruch 4, wobei das Partitionierungssystem (19) auf der Verarbeitungsvorrichtung (13) einen zweiten Ausgang (23) für ein Übertragungsfreigabesignal (mEN) umfasst und auf dem Hardware-Sicherheitsmodul einen dritten Ausgang (34) für ein Cybersicherheitszustandssignal (ISH) der Steuereinheit (12) umfasst, wobei der zweite Ausgang (23) und der dritte Ausgang (34) in dem logischen Operator (20) zusammengeführt sind, der als eigenen Ausgang ein Freigabesignal (EN) bereitstellt,
wobei das Partitionierungssystem (19) auf der Kommunikationsvorrichtung (15) einen zweiten Eingang (25) umfasst, der mit dem logischen Operator (20) verbunden ist, um das Freigabesignal (EN) zu empfangen, das ausgelegt ist, um die Übertragung an das Fahrzeugnetz (11) für die Kommunikationsvorrichtung (15) freizugeben, d. h. den Übertragungsmodus ausschließlich bei gleichzeitigem Vorliegen des Übertragungsfreigabesignals (mEN) und des Cybersicherheitszustandssignals (ISH) der Steuereinheit (12) freizugeben.

6. Steuereinheit (12) nach Anspruch 5, wobei der logische Operator (20) ein UND-Port (26) ist.

7. Steuereinheit (12) nach Anspruch 5 oder 6 und umfassend eine Hilfsverarbeitungsvorrichtung (17), insbesondere einen Begleitchip (18), die den Betrieb der Verarbeitungsvorrichtung (13) und die Stromversorgung der Kommunikationsvorrichtung (15) überwacht, wobei die Hilfsverarbeitungsvorrichtung (17) einen vierten Ausgang (24) für ein Signal (SH) über den ordnungsgemäßen Zustand der Hilfsverarbeitungsvorrichtung (17) umfasst, wobei der vierte Ausgang (24) mit einem System (27) zum Abschalten von Fahrzeugsicherheitsaktuatoren verbindbar ist, das ausgelegt ist, bei einem Ausfall des Signals (SH) über den ordnungsgemäßen Zustand der Hilfsverarbeitungsvorrichtung (17) zumindest einen Teil der für die Fahrzeugsicherheit relevanten Aktuatoren (10) abzuschalten.

8. Steuereinheit (12) nach Anspruch 7, wobei der zweite Ausgang (23), der dritte Ausgang (34) und der vierte Ausgang (24) zu dem logischen Operator (20) zusammengeführt sind, der selbst das Freigabesignal (EN) ausgibt.

9. Steuereinheit (12) nach Anspruch 7 oder 8, wobei die Verarbeitungsvorrichtung (13) einen fünften Ausgang (28) für ein Signal (mSH) über den ordnungsgemäßen Zustand der Verarbeitungsvorrichtung (13) umfasst, wobei der fünfte Ausgang (28) mit dem System (27) zum Abschalten der Fahrzeugsicherheitsaktuatoren verbindbar ist, das bei Fehlen des Signals (mSH) über den ordnungsgemäßen Zustand der Verarbeitungsvorrichtung (13) zumindest einen Teil der Fahrzeugsicherheitsaktuatoren abschaltet.

10. Steuereinheit (12) nach einem der vorhergehenden Ansprüche und umfassend eine Vielzahl von Kommunikationsvorrichtungen, wobei die Kommunikationsvorrichtungen zumindest teilweise mit einem selben Partitionierungssystem (19) verbunden sind, das die Vielzahl von Kommunikationsvorrichtungen bei einem Ausfall der Verarbeitungsvorrichtung (13) oder einer von dem Hardwaresicherheitsmodul erkannten Cybersicherheitsanomalie in den Standby-Modus forciert.

11. Steuereinheit (12) nach einem der vorhergehenden Ansprüche, wobei die Kommunikationsvorrichtung (15) ausgelegt ist, um ein Wecksignal (WU) von dem Fahrzeugnetz (11) zu empfangen, wobei dieses Signal an die Hilfsverarbeitungsvorrichtung (17) übertragen wird, die wiederum ein Rücksetzsignal (RST) an die Verarbeitungsvorrichtung (13) sendet, um diese in die Lage zu versetzen, den Wartemodus durch Umschalten in den Übertragungsmodus zu beenden.

12. Straßenfahrzeug (1), umfassend:
- vier Räder (2, 3), von denen mindestens ein Paar von Rädern (2, 3) angetrieben ist;
- ein Antriebssystem (4), das vorzugsweise elektrisch oder hybrid ist;
- einen Niederspannungsstromkreis (7), insbesondere umfassend ein Niederspannungsspeichersystem (8);
- eine Steuereinheit (12) nach einem der vorhergehenden Ansprüche, die von dem Niederspannungsstromkreis (7) versorgt wird;
- ein Fahrzeugnetz (11), das die Steuereinheit (12) mit einem oder mehreren elektrischen Verbrauchern (9) verbindet.

13. Fahrzeug nach Anspruch 12, wobei der Niederspannungskreis direkt mit der Hilfsverarbeitungsvorrichtung (17) und der Kommunikationsvorrichtung (15) verbunden ist, wobei die Hilfsverarbeitungsvorrichtung (17) die korrekte Stromversorgung der Steuereinheit (12) überwacht.

14. Fahrzeug nach Anspruch 12 oder 13 und umfassend eine Vielzahl von Nebensteuereinheiten (39), die mit der Steuereinheit (12) verbunden sind und deren Sicherheit vollständig dem Partitionierungssystem (19), insbesondere dem Sicherheitsmodul (30), anvertraut ist.

## Revendications

1. Unité de commande de véhicule (12) comprenant :
- un dispositif de traitement (13), en particulier un microcontrôleur (14), qui est configuré et programmé pour traiter, durant le fonctionnement normal, un ensemble de données de sortie (OD) en fonction d'un ensemble de données d'entrée (ID) provenant d'au moins un réseau véhiculaire (11) ;
- un dispositif de communication (15), en particulier un émetteur-récepteur (16), connecté de manière bidirectionnelle au dispositif de traitement (13) et au réseau véhiculaire (11) ; dans laquelle le dispositif de communication (15) est configuré pour recevoir l'ensemble de données d'entrée (ID) à partir de l'au moins un réseau véhiculaire (11) et les transmettre au dispositif de traitement (13), et pour recevoir l'ensemble de données de sortie (OD) à partir du dispositif de traitement (13) et les transmettre au réseau véhiculaire (11) ;
dans laquelle le dispositif de communication (15) est configuré pour fonctionner sélectivement entre un mode de transmission, dans lequel il peut communiquer de manière bidirectionnelle avec le réseau véhiculaire (11), et un mode veille, dans lequel il ne peut que recevoir à partir du réseau véhiculaire (11) ;
l'unité de commande (12) comprend un module de sécurité matériel (30) configuré pour détecter les anomalies de cybersécurité ;
l'unité de commande (12) comprend un système de partitionnement (19) qui, sélectivement, dans le cas d'une anomalie de cybersécurité détectée par le module matériel de sécurité (30), ou en particulier également dans le cas d'une anomalie du dispositif de traitement (13), est configuré pour contraindre le dispositif de communication (15) à rester dans le mode veille.

2. Unité de commande (12) selon la revendication 1, dans laquelle le module de sécurité (30) est un module Hardware Trust Anchor (HTA).

3. Unité de commande (12) selon la revendication 1 ou 2, dans laquelle le système de partitionnement (19) comprend une première sortie (21) sur le dispositif de traitement (13) et une première entrée (22), connectée à la première sortie (21), sur le dispositif de communication (15), la première entrée (22) étant configurée pour recevoir à partir de la première sortie (21) un signal (ST) pour l'activation du dispositif de communication (15) dans la réception à partir du réseau véhiculaire (11), c'est-à-dire pour activer au moins le mode veille.

4. Unité de commande (12) selon l'une quelconque des revendications précédentes, dans laquelle le système de partitionnement (19) comprend un opérateur logique (20), qui est connecté en entrée au dispositif de traitement (13) et au module de sécurité matériel (30) et en sortie au dispositif de communication (15).

5. Unité de commande (12) selon la revendication 4, dans laquelle le système de partitionnement (19) comprend, sur le dispositif de traitement (13), une deuxième sortie (23) pour un signal d'activation de transmission (mEN), et comprend, sur le module de sécurité matériel, une troisième sortie (34) pour un signal de santé de cybersécurité (ISH) de l'unité de commande (12) ; la deuxième sortie (23) et la troisième sortie (34) convergeant dans l'opérateur logique (20), qui fournit comme sa propre sortie un signal d'activation (EN) ;
dans laquelle le système de partitionnement (19) comprend, sur le dispositif de communication (15), une deuxième entrée (25) connectée à l'opérateur logique (20) pour recevoir le signal d'activation (EN), qui est configuré pour activer la transmission vers le réseau véhiculaire (11) pour le dispositif de communication (15), c'est-à-dire pour activer le mode de transmission, exclusivement en coprésence du signal d'activation de transmission (mEN) et du signal de santé de cybersécurité (ISH) de l'unité de commande (12).

6. Unité de commande (12) selon la revendication 5, dans laquelle l'opérateur logique (20) est un port ET (26).

7. Unité de commande (12) selon la revendication 5 ou 6 et comprenant un dispositif de traitement auxiliaire (17), en particulier une puce compagnon (18), qui supervise le fonctionnement du dispositif de traitement (13) et l'alimentation électrique du dispositif de communication (15) ; le dispositif de traitement auxiliaire (17) comprend une quatrième sortie (24) pour un signal (SH) de bonne santé du dispositif de traitement auxiliaire (17), dans laquelle la quatrième sortie (24) peut être connectée à un système (27) de désactivation des actionneurs de sécurité du véhicule, qui est configuré pour désactiver au moins une partie des actionneurs (10) relatifs à la sécurité du véhicule en cas de défaillance du signal (SH) de bonne santé du dispositif de traitement auxiliaire (17).

8. Unité de commande (12) selon la revendication 7, dans laquelle la deuxième sortie (23), la troisième sortie (34) et la quatrième sortie (24) convergent vers l'opérateur logique (20), qui émet de lui-même le signal d'activation (EN).

9. Unité de commande (12) selon la revendication 7 ou 8, dans laquelle le dispositif de traitement (13) comprend une cinquième sortie (28) pour un signal (mSH) de bonne santé du dispositif de traitement (13), la cinquième sortie (28) pouvant être connectée au système (27) de désactivation des actionneurs de sécurité du véhicule, qui désactive au moins une partie des actionneurs de sécurité du véhicule en cas d'absence du signal (mSH) de bonne santé du dispositif de traitement (13).

10. Unité de commande (12) selon l'une quelconque des revendications précédentes et comprenant une pluralité de dispositifs de communication, les dispositifs de communication étant au moins partiellement connectés à un même système de partitionnement (19) qui, en cas de défaillance du dispositif de traitement (13) ou d'une anomalie de cybersécurité détectée par le module de sécurité matériel, contraint la pluralité de dispositifs de communication à rester dans le mode veille.

11. Unité de commande (12) selon l'une quelconque des revendications précédentes, dans laquelle le dispositif de communication (15) est configuré pour recevoir un signal de réveil (WU) à partir du réseau véhiculaire (11), lequel signal est transmis au dispositif de traitement auxiliaire (17) qui envoie à son tour un signal de réinitialisation (RST) au dispositif de traitement (13), de manière à pouvoir quitter le mode veille en entrant dans le mode de transmission.

12. Véhicule routier (1) comprenant :
- quatre roues (2, 3), dont au moins une paire de roues (2, 3) est motrice ;
- un système de groupe motopropulseur (4), de préférence électrique ou hybride ;
- un circuit électrique basse tension (7), comprenant notamment un système de stockage basse tension (8) ;
- une unité de commande (12) selon l'une quelconque des revendications précédentes, qui est alimentée par le circuit électrique basse tension (7) ;
- un réseau véhiculaire (11), qui relie l'unité de commande (12) à une ou plusieurs charges électriques (9).

13. Véhicule selon la revendication 12, dans lequel le circuit basse tension est directement connecté au dispositif de traitement auxiliaire (17) et au dispositif de communication (15), dans lequel le dispositif de traitement auxiliaire (17) supervise l'alimentation électrique correcte de l'unité de commande (12).

14. Véhicule selon la revendication 12 ou 13, et comprenant une pluralité d'unités de commande secondaires (39) connectées à l'unité de commande (12) et dont la sécurité est entièrement confiée au système de partitionnement (19), en particulier au module de sécurité (30).
